Europäisches Patentamt

European Patent Office

Office européen des brevets

(11) Publication number: **0 541 169 A1**

## EUROPEAN PATENT APPLICATION

(21) Application number: **92203358.4**

(22) Date of filing: **02.11.92**

(51) Int. Cl.5: **C08G 59/40**, C09D 163/00

(30) Priority: **06.11.91 BE 9101025**

(43) Date of publication of application:
**12.05.93 Bulletin 93/19**

(84) Designated Contracting States:
**AT BE CH DE DK ES FR GB IT LI NL PT SE**

(71) Applicant: **DSM N.V.**
**Het Overloon 1**
**NL–6411 TE Heerlen(NL)**

(72) Inventor: **Molhoek, Leendert Jan**
**Jos Lussenburglaan 17**
**NL–8072 HV Nunspeet(NL)**

(54) Two–component system for coatings.

(57) The invention relates to a two–component system wherein a first component contains acid groups and a second component contains epoxy groups.

The component containing acid groups is a functional polymer or oligomer with a phosphoric acid ester function.

The functional polymer or oligomer with a phosphoric acid ester function is preferably based on styrene, $(C_1 - C_{12})$alkyl (meth)acrylate, hydroxyethyl(meth)acrylate and the mono–di–phosphate ester of hydroxyethyl (meth)acrylate.

The compound containing epoxy groups is preferably epoxidized oil or a mixture of an epoxidized oil and a hydroxyl functional polymer.

Rank Xerox (UK) Business Services
(3.10/3.6/3.3.1)

The present invention relates to a two‑component system for use as a basis for coatings, wherein a first component contains acid groups and a second component contains epoxy groups.

Such systems are known from the paper on "Isocyanate‑free two‑component systems based on a carboxyl‑epoxy" presented by G. Walz at the XIth International Conference in Organic Coatings Science and Technology, held in Athens from 8‑12 July 1985. However, the search is still on for isocyanate‑free two‑component systems yielding coatings with, for instance, good adhesion to the substrate, good colour properties, good flexibility, good water resistance, good drying properties and no emissions of environ‑mentally harmful compounds such as, for instance, chlorine compounds.

The invention is characterized in that the component containing acid groups is a functional polymer or oligomer with a phosphoric acid ester function.

The two‑component system therefore comprises:

a) a functional polymer or oligomer with a phosphoric acid function and

b) a compound containing epoxy groups.

The two‑component system of the present invention results in coatings having good properties, including, for instance, fast drying, a good chemical resistance and very good adhesion to metal. In addition, there are no emissions of environmentally harmful compounds such as chlorine compounds.

The present system is a two‑component, an isocyanate free and an ambient temperature curing system. A two‑component system is a crosslinking system which must be stored in separate containers before use. Otherwise, they react and form a useless gel.

Per molecule the functional polymer or oligomer with a phosphoric acid ester function preferably contains at least 2 acid phosphate groups per mole (in the form of $-O-PO(OH)_2$ and/or $-O-PO(OH)-OR$).

According to a preferred embodiment of the invention the functional polymer or oligomer with a phosphoric acid ester function is an oligomer or polymer of a compound according to either of the formulae $(RO)_2PO(OH)$ and/or $(RO)PO(OH)_2$,

where R represents an alcohol residue, derived from an unsaturated, polymerizable alcohol with 2‑12 carbon atoms, or

where R represents a group AB,

where A is an acid residue, derived from an unsaturated, polymerizable carboxylic acid with 3‑25 carbon atoms from the group formed by acrylic acid, methacrylic acid, crotonic acid, mono‑esterified fumaric acid, mono‑esterified maleic acid and mono‑esterified itaconic acid, and

where B represents a bivalent residue that is derived from a diol and/or a phosphoric acid containing compound according to the formula (R'O)(TO)PO(OH),

where R' represents an alcohol residue derived from an unsaturated, polymerizable carboxylic acid with 2‑12 carbon atoms or

where R' represents a group A'B',

where A' is an acid residue, which is derived from an unsaturated, polymerizable carboxylic acid with 3‑25 carbon atoms, and

where B' represents a bivalent residue derived from a diol, and

where TO‑ represents a residue derived from a branched or unbranched aliphatic alcohol with 6‑22 carbon atoms or from a polyoxyalkylated alkyl phenol with 7‑30 carbon atoms or from the product of an addition reaction of ethylene oxide with an alcohol with 6‑22 carbon atoms or from the product of an addition reaction of an alkene oxide containing at least 3 carbon atoms with an alcohol with 1‑15 carbon atoms.

In the formulae $(RO)_2PO(OH)$ and $(RO)PO(OH)_2$ the RO group may be derived from an unsaturated, polymerizable alcohol with 2‑12 carbon atoms such as, for instance, allyl alcohol, crotyl alcohol, un‑decylene alcohol or cinnamyl alcohol.

Further, the group RO may represent a group A‑B‑O, where A is an acid residue, derived from an unsaturated, polymerizable carboxylic acid with 3‑25 carbon atoms, and where B is a residue derived from a bivalent alcohol. Examples of suitable carboxylic acids are acrylic acid, methacrylic acid and crotonic acid. Monoesters of a dicarboxylic acid, such as, for instance, fumaric acid, maleic acid or itaconic acid, and an alcohol with 1‑20 carbon atoms, such as, for instance, methanol, ethanol, propanol, butanol, heptanol, 2‑ethyl hexanol, decanol, tridecanol, cyclohexanol or benzyl alcohol are also suitable.

Examples of bivalent alcohols are the branched or unbranched aliphatic or cycloaliphatic diols with 2‑20 carbon atoms, such as, for instance, ethylene glycol, propylene glycol, 1,4‑butanediol, 1,2‑butanediol, 1,2‑hexanediol, 1,2‑decanediol, 1,2‑dodecanediol or 1,4‑ bis (hydroxymethyl) cyclohexane.

Other suitable bivalent alcohols are the polyoxyalkylene glycols with between 2‑100 units derived from ethylene glycol, propylene glycol, 1,2‑butanediol or 1,4‑butanediol, such as, for instance, diethylene

2

glycol, triethylene glycol, tetraethylene glycol, dipropylene glycol, tripropylene glycol, dibutylene glycol, tributylene glycol and higher polyoxyalkylene glycols.

Other suitable diols include diols containing an aromatic ring, such as for instance 1,4 − bis − (hydroxymethyl) benzene and hydroxyl − terminated polyester diols and polylactones with a molecular weight between 200 and 1000, such as, for instance, polycaprolactone.

Preferably the compounds containing phosphoric acid are compounds according to formulae $(ABO)_2PO(OH)$ and/or $(ABO)PO(OH)_2$, where A is derived from acrylic acid, methacrylic acid or crotonic acid, and B is derived from a branched or unbranched bivalent aliphatic alcohol with 2 − 6 carbon atoms. Suitable compounds include the mono − di − phosphate esters of hydroxyethyl (meth)acrylate, hydroxyethyl crotonate, 4 − hydroxybutyl (meth)acrylate and 4 − hydroxy butyl crotonate.

Preferably reaction products of hydroxyethyl (meth)acrylate and $P_2O_5$ are used.

The functional polymer or oligomer with a phosphoric acid ester function may further be based on unsaturated monomers, such as, for instance, vinyl aromatic monomers. Suitable vinyl aromatic monomers include, for instance, styrene, vinyl toluene and $\alpha$ − methyl styrene, vinyl acetate, vinyl versatic acid, vinyl laurate, vinyl caprate and/or monomers containing (meth)acrylate groups.

The functional polymer or oligomer with a phosphoric acid ester function may also be based on $(C_1 - C_{12})$ alkyl (meth)acrylate, $(C_1 - C_{12})$ dialkyl itaconate, $(C_1 - C_{12})$ dialkyl fumarate and/or $(C_1 - C_{12})$ dialkyl maleinate.

The functional polymer can also be based on hydroxylcontaining monomers such as for example hydroxyethyl(meth)acrylate.

The functional polymer or oligomer with a phosphoric acid ester function is preferably based on styrene, $(C_1 - C_{12})$ alkyl(meth)acrylate, hydroxyethyl(meth)acrylate and the mono − di − phosphate ester of hydroxylethyl (meth)acrylate.

The amount by weight of phosphate ester is usually between 5 and 40 percent by weight (relative to the total amount of monomers) and is preferably between 15 and 30 percent by weight.

The molecular weight (Mw) of the polymer or oligomer is usually between 500 and 100,000.

The functional polymer or oligomer with a phosphoric acid ester function can be obtained through solution polymerization using customary methods. Suitable solvents include, for instance, water, ethanol, butanol, isobutanol, tetrahydrofuran, ether alcohols, butylacetate, methyl pyrrolidone and/or propylene glycol ether. Preferably alcohols are used. The polymerization temperature may be between 50°C and 250°C. If necessary chain transfer agents, such as for example mercaptans, can be added in amounts of between, for instance, 0.5 and 10 wt. percent (relative to the total amount of monomers), to the polymerization medium.

The compound containing epoxy groups is preferably a polymer or an oligomer having at least 2 epoxy groups per mole. The compound containing epoxy groups may, for instance, be chosen from epoxidized oils, polyglycidyl ethers, polyglycidyl esters, epoxy resins on the basis of bisphenol − A glycidyl ethers and/or polycycloaliphatic epoxy compounds.

Examples of suitable oils which can serve as a basis for the epoxidized oils include soybean oil, linseed oil, safflower oil, caraway oil, rape seed oil, wood oil and/or fish oil. Preferably soybean oil and linseed oil are used. Natural epoxidized oils are also suitable.

Preferably epoxidized oils or a mixture of an epoxidized oil and a hydroxyl functional polymer are used.

Preferably the hydroxylfunctional polymer is a hydroxylacrylate polymer.

Besides the above − mentioned oils also the esters of fatty acids with polyols other than glycerol, such as trimethylol propane or (di − )pentaeritritol, can be applied. The acids of said unsaturated oils and tall oil fatty acid can be used as fatty acids.

The separate components of the two − component system can be applied at ambient temperatures in excess of 10°C, preferably at temperatures between 20°C and 100°C. The system is very suitable for use at room temperature. The ratio (in molar equivalents) in which reactive groups of functional polymer or oligomer with a phosphoric acid ester function reacts with the compound containing epoxy groups is usually chosen between substantially 1:1 and 1:10 and is preferably between substantially 1:1 and 1:4.

To obtain coatings customary additives, such as for example catalysts, pigments, dyestuffs, fillers, thickening agents, flow − promoting agents, gloss − reducing agents and/or stabilizers, may be added to the system.

Suitable substrates for the coatings on the basis of the present two − component system are, for instance, metal, stone, wood and plastics.

The coatings may be applied, for instance, as primers, top coatings, concrete coatings, wall paint and anti − graffiti paint.

The present two − component system can also be used as a basis for adhesives.

3

The invention will be elucidated on the basis of the following non‒restrictive experiments and examples.

Experiment A

Preparation of a phosphate functional acrylate resin

1050 parts by weight of n‒butanol and 150 parts by weight of demineralized water were weighed into a 3000 ml four‒necked flask and heated to reflux (about 100°C). A mixture consisting of 750 parts by weight of styrene, 300 parts by weight of mono‒di‒phosphate ester of hydroxyethyl methacrylate (ratio mono/di 70/30), 150 parts by weight of hydroxyethyl methacrylate, 48 parts by weight of VAZO 64™ (azo‒iso‒butyro nitrile, ex. Du Pont) and 30 parts by weight of 1,3‒mercapto‒propanol were added dropwise to the contents of the flask in about 3 hours. During this addition the temperature was kept at 100°C. The reaction mixture was subsequently allowed to react for 3 hours at 100°C. Halfway through this period 5 parts by weight of benzoyl peroxide were added to the flask contents.

The resulting resin solution was colourless and had a solids content of 50% and an acid number of 49 mg KOH/g.

Experiment B

Preparation of a phosphate functional acrylate resin

370 parts by weight of n‒butanol and 30 parts by weight of demineralized water were weighed into a 1000 ml four‒necked flask and heated to reflux (about 100°C). A mixture consisting of 200 parts by weight of styrene, 120 parts by weight of mono‒di‒phosphate ester of hydroxyethyl methacrylate, 50 parts by weight of hydroxyethyl methacrylate, 15 parts by weight of VAZO 64™ (azo‒isobutyro nitrile, ex. Du Pont) and 15 parts by weight of mercaptopropanol were added dropwise to the contents of the flask in about 3 hours. During this addition the temperature was kept at 100°C. The reaction mixture was subsequently allowed to react for 3 hours at 100°C. Halfway through this period 2 parts by weight of benzoyl peroxide were added to the flask contents.

The resulting colourless resin solution had a solids content of 51% and an acid number of 60 mg KOH/g.

Experiment C

Preparation of a phosphate functional polyester resin

150 Parts by weight of a polyester resin (composed of 258 parts by weight of trimethylol propane, 166 parts by weight of isophthalic acid and diluted to 76% solids with methyl ethyl ketone), 85 parts by weight of polyphosphoric acid and 50 parts by weight of methyl isobutyl ketone were mixed at room temperature and the temperature was allowed to rise to 60°C due to the exothermic reaction that occurred. After 5 hours the mixture was diluted with toluene and twice washed with water to remove the free phosphoric acid. The dried organic layer was evaporated to about 60% solids.

A clear, light yellow resin solution with a solids content of 64% and an acid number of 84 mg KOH/g was obtained.

Examples I‒IV

Preparation of coatings

The coatings were prepared by mixing the components intimately in certain ratios (see Table I) for 5‒10 minutes at room temperature. The resulting mixtures were applied to metal test panels, the dry layer thickness being about 40‒60 μm, and dried at room temperature for 7 days. After 1 week the coatings were tested for the following parameters:
- hardness according to König (DIN 53157)
- chemical resistance: MEK double rubs
- gloss at angles of 20 and 60 degrees (ASTM D 523)
- elasticity, Erichsen mm (DIN 53156)

EP 0 541 169 A1

− drying, minutes (NEN circ. 87)

TABLE 1

| Example, white paint | | I | II | III | IV |
|---|---|---|---|---|---|
| Resin (acc. to Experiment) | | A | B | C | A |
| Epoxy component | | E[1] | E[1] | E[1] | E[1] |
| Hydroxy resin | | − | − | − | H[2] |
| Mixing ratio (parts by weight) | | 1:1 | 1:1 | 1.5:1 | 1:0.85:0.25 |
| Gloss, | 20° | 87 | 85 | 81 | 80 |
| | 60° | 95 | 93 | 91 | 91 |
| Drying, | dust − free | 15 | 30 | +[3] | 30 |
| | tack − free | 75 | 225 | +[3] | 65 |
| Hardness | | 33 | 19 | 60[4] | 70 |
| Adhesion to steel[3] | | + + + | + + + | + | + + + |
| MEK double rubs | | 195 | >500 | −[3] | 150 |
| Elasticity, Erichsen | | >10 | >10 | >10 | >10 |

1) E = epoxydized linseed oil
2) H = hydroxyacrylate resin; Uracron XP 430 Cy
3) + + + = very good
+ + = good
+ = moderate
− = poor
4) This coating was cured at 80°C during 30 minutes.

## Claims

1. Two − component system wherein a first component contains acid groups and a second component contains epoxy groups, characterized in that the component containing acid groups is a functional polymer or oligomer with a phosphoric acid ester function.

2. The two − component system according to claim 1,
characterized in that the functional polymer or oligomer with a phosphoric acid ester function is an oligomer or polymer of a compound according to either of the formulae $(RO)_2 PO(OH)$ and/or $(RO)PO - (OH)_2$,
where R represents an alcohol residue, derived from an unsaturated, polymerizable alcohol with 2 − 12 carbon atoms, or
where R represents a group AB,
where A is an acid residue, derived from an unsaturated, polymerizable carboxylic acid with 3 − 25 carbon atoms from the group formed by acrylic acid, methacrylic acid, crotonic acid, mono − esterified fumaric acid, mono − esterified maleic acid and mono − esterified itaconic acid, and
where B represents a bivalent residue that is derived from a diol and/or a phosphoric acid containing compound according to the formula $(R'O)(TO)PO(OH)$,
where R' represents an alcohol residue derived from an unsaturated, polymerizable carboxylic acid with 2 − 12 carbon atoms or
where R' represents a group A'B',
where A' is an acid residue, which is derived from an unsaturated, polymerizable carboxylic acid with 3 − 25 carbon atoms, and
where B' represents a bivalent residue derived from a diol, and
where TO − represents a residue derived from a branched or unbranched aliphatic alcohol with 6 − 22 carbon atoms or from a polyoxyalkylated alkyl phenol with 7 − 30 carbon atoms or from the product of

5

an addition reaction of ethylene oxide with an alcohol with 6 − 22 carbon atoms or from the product of an addition reaction of an alkene oxide containing at least 3 carbon atoms with an alcohol with 1 − 15 carbon atoms.

3. The two − component system according to any one of claims 1 − 2, characterized in that the functional polymer or oligomer with a phosphoric acid function is based on styrene, $(C_1 − C_{12})$alkyl (meth)acrylate, hydroxyethyl(meth)acrylate or the mono − di − phosphate ester of hydroxyethyl (meth)acrylate.

4. The two − component system according to any one of claims 1 − 3, characterized in that the component containing epoxy groups is a polymer or oligomer with at least 2 epoxy groups per mole.

5. The two − component system according to any one of claims 1 − 4, characterized in that the component containing epoxy groups is epoxidized oil or a mixture of an epoxidized oil and a hydroxyl functional polymer.

6. Use of the two − component system according to any one of claims 1 − 5 in the preparation of coatings.

7. Coating composition comprising the two − component system according to any one of claims 1 − 5.

8. A substrate coated with a coating composition according to claim 7.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 029 958 (THE DOW CHEMICAL COMPANY) <br> * page 2 * <br> * page 4, line 18 - line 22 * <br> * page 4, line 29 - page 5, line 19 * <br> * page 11 - page 12; example 3 * <br> * claims 1,11 * <br> --- | 1-2,4-5 | C08G59/40 <br> C09D163/00 |
| X | DATABASE WPI <br> Derwent Publications Ltd., London, GB; <br> AN 75-77644W <br> & JP-A-50 045 740 (NIPPON KOKAN KK) 24 April 1975 <br> * abstract * <br> --- | 1-2,6-7 | |
| X | DATABASE WPIL <br> Derwent Publications Ltd., London, GB; <br> AN 87-090765 <br> & JP-A-62 041 216 (KAO CORP) 23 February 1987 <br> * abstract * <br> --- | 1-2,6 | |
| X | DATABASE WPIL <br> Derwent Publications Ltd., London, GB; <br> AN 84-253400 <br> & JP-A-59 152 922 (MITSUBISHI ELECTRIC CORP) 31 August 1984 <br> * abstract * <br> --- | 1-2,4, 6-7 | TECHNICAL FIELDS SEARCHED (Int. Cl.5) <br><br> C08G <br> C09D |
| X | DATABASE WPIL <br> Derwent Publications Ltd., London, GB; <br> AN 81-22406D <br> & JP-A-56 011 920 (MITSUBISHI PETROCH KK) 5 February 1981 <br> * abstract * <br> ----- | 1-2,6-7 | |

The present search report has been drawn up for all claims

| Place of search | Date of completion of the search | Examiner |
|---|---|---|
| THE HAGUE | 04 FEBRUARY 1993 | SIEMENS T. |

EPO FORM 1503 03.82 (P0401)